# EUROPÄISCHE PATENTSCHRIFT

(11) **EP 3 118 455 B1**
(45) Veröffentlichungstag und Bekanntmachung des Hinweises auf die Patenterteilung: **23.01.2019**
(21) Anmeldenummer: 16174223.4
(22) Anmeldetag: 13.06.2016
(51) Int. Cl.: F04B 11/00, F04B 15/08, F04B 39/00, F16L 55/052

(54) **PULSATIONSDÄMPFERVORRICHTUNG**
PULSATION DAMPER DEVICE
DISPOSITIF D'AMORTISSEMENT DE PULSATIONS

(30) Priorität: 16.07.2015 CH 10372015
(43) Veröffentlichungstag der Anmeldung: 18.01.2017
(73) Patentinhaber: Fives Cryomec AG, 4123 Allschwil (CH)
(72) Erfinder: Seillot, Matthieu, 57930 Romelfing (FR); Boeglin, Stéphane, 68220 Liebenswiller (FR); Lewon, Ivan, 68640 Muespach (FR)
(74) Vertreter: Schneider Feldmann AG Patent- und Markenanwälte

(56) Entgegenhaltungen:
- GB-A- 533 135
- GB-A- 1 594 212
- US-A- 1 459 797
- US-A- 3 157 202
- US-A- 3 447 557
- US-A- 3 648 472
- US-A- 4 190 403
- US-A- 4 445 829
- US-A1- 2005 223 707

## Beschreibung

### Technisches Gebiet

Die vorliegende Erfindung betrifft eine Pulsationsdämpfervorrichtung für diskontinuierlich fördernde Pumpen im kryogenen Betrieb, d.h. ein Betrieb im Tieftemperaturbereich, gemäss Oberbegriff des ersten Patentanspruches.

### Stand der Technik

Pulsationsdämpfer sind seit langem bekannt und können als Ausrüstungsteil beschrieben werden, welche als Zubehör in Pumpenanlagen eingesetzt werden und die Druckpulsationen von diskontinuierlich fördernden Pumpen, also beispielsweise von Hubkolbenpumpen, ausgleichen.

Unter Pulsationen wird üblicherweise ein rhythmisch schwankender Prozess, der wellenförmig zwischen Ausdehnen und Zusammenziehen pendelt, verstanden. Bezogen auf die diskontinuierlich fördernden Pumpen werden die auftretenden Strömungsfluktuationen umgewandelt in Druckpulsationen aufgrund des Systemwiderstands, wobei die Druckpulsationen mit der Viskosität eines Fluids und mit der Dichte des Fluids im Zusammenhang stehen. Mit anderen Worten können somit unter Druckpulsationen auch Druckwellen verstanden werden. Handelt es sich um eine Flüssigkeit, so kann davon ausgegangen werden, dass keine Kompressibilität vorliegt und dass deshalb beispielsweise die Druckstösse einer Kolbenpumpe direkt in ein Hydrauliksystem einfliessen, was oft unerwünscht ist.

Je nach Anwendungsbereich, beispielsweise bei einem nachgeschalteten Verbrennungsprozess, werden gleichbleibende Fördergeschwindigkeit und Fördermenge gefordert. Im Weiteren ist üblicherweise ein Durchflussmesser nahe der Pumpe angeordnet, wobei sich Effekte ausgehend von den Druckpulsationen nachteilig auf die Durchflussregelung auswirken können beziehungsweise eine Regelung des Durchflusses erschwert ist. Eine besonders wirksame und verlässliche Dämpfung der Druckpulsationen anhand eines Pulsationsdämpfer ist somit unmittelbar für die Regelung des Durchflusses sowie die nachgelagerte Anwendung wichtig.

Pulsationsdämpfer, welche für diskontinuierlich fördernde Pumpen für Flüssigkeiten im nicht-kryogenen Betrieb geeignet ist, sind bereits bekannt. Solche bekannte Pulsationsdämpfer umfassen einen Behälter, wobei sich typischerweise innerhalb des Behälters eine flexible Membran befindet. Die flexible Membran trennt ein Gasvolumen vom nicht-kryogenen, flüssigen Fördermedium ab. Während eines Pumpstosses wird eine Teilmenge des Fördermediums vom Pulsationsdämpfer aufgenommen und die Gasblase im Pulsationsdämpfer wird komprimiert. Geht der von der Pumpe geförderte Volumenstrom zurück, dehnt sich die Gasblase wieder aus und es wird Medium in das angeschlossene System zurückgegeben. Üblicherweise wird die flexible Membran durch Kautschuk gebildet und deshalb als Material für die Verwendung im kryogenen Betrieb ungeeignet.

Für diskontinuierlich fördernde Pumpen im kryogenen Betrieb, d.h. eine Pumpe zum Fördern eines kryogenen Fördermediums, insbesondere Flüssiggas, ist beispielsweise im Zusammenhang dem Pumpentyps SDPD 30/32 der Firma Cryostar bekannt, ein druckflaschenähnliches Druckreservoir zur Dämpfung von Druckpulsationen bzw. Druckwellen zu verwenden. Das druckflaschenähnliche Druckreservoir fungiert als Verdampfer des verwendeten, durch die Pumpe diskontinuierlich geförderten Flüssiggases, wobei die Dämpfung der Druckpulsationen durch das verdampfte, und somit kompressibel gewordene Flüssiggas im gasförmigen Zustand resultiert. Solche als Verdampfer fungierende, druckflaschenähnliche Druckreservoire haben den Nachteil, dass die Verdampfung des Flüssiggases kaum gesteuert werden kann.

Aus US 4,878,350 ist im Weiteren ein Pulsationsdämpfer für eine diskontinuierlich fördernde Pumpe bekannt, welche für die Verwendung im kryogenen Betrieb geeignet ist. Auch hier wird eine Dämpfung der Druckpulsationen wird durch einen Phasenwechsel des verwendeten, im Wesentlichen inkompressiblen Flüssiggases in den gasförmigen Zustand erzielt.

Der Pulsationsdämpfer aus US 4,878,350 umfasst im Wesentlichen ein Druckgefäss, welches in drei Sektionen unterteilt ist: einen Flüssiggasvolumenbereich, einen Gasvolumenbereich sowie eine diese beiden Bereiche trennenden Übergangsabschnitt. Der Übergangsabschnitt weist eine Vielzahl von querschnittverengenden Verbindungsrohren auf, wobei die Grenzfläche flüssig-gasförmig in den Verbindungsrohren des Übergangsabschnitts lokalisiert ist. Mit anderen Worten oszillieren das inkompressible Flüssiggas (also das Flüssiggas im flüssigen Aggregatszustand) und das kompressible Flüssiggas im gasförmigen Zustand im Bereich des Übergangsabschnitts. Somit findet eine Verdampfung des kryogenen Fördermediums im Übergangsabschnitt statt. Während des Betriebs des Pulsationsdämpfers aus US 4,878,350 muss zur Erzielung der gewünschten Dämpfung ein Temperaturunterschied von 55°C zwischen Flüssiggasvolumenbereich und Gasvolumenbereich eingestellt werden, was nachteilig mit einem besonderen Aufwand verbunden ist.

Eine weitere Pulsationsdämpfervorrichtung im kryogenen Betrieb ist aus US 3,880,193 bekannt, umfassend ein Druckgefäss, wobei im Innenraum des Druckgefässes ein inneres Zylinderrohr angeordnet ist und wobei das innere Zylinderrohr eine Zuleitung zum Zuleiten eines kryogenen Fördermediums umfasst. Das innere Zylinderrohr ist nach oben offen und erlaubt einen Austausch des kryogenen Fördermediums mit dem äusseren Druckgefäss. Dabei ist im Wesentlichen im inneren Zylinder ein Flüssiggasvolumenbereich und ein Gasvolumenbereich und im Innenraum des äusseren Druckgefässes nur ein Gasvolumenbereich ausgebildet. Diese aus der US 3,880,193 bekannte Pulsationsdämpfervorrichtung hat den offensichtlichen Nachteil aufgrund des offenen Übergangs flüssig-gasförmig im inneren Zylinder, auf abrupte Wechsel von Betriebszuständen empfindlich zu reagieren. Um ein abruptes Einströmen des kryogenen Mediums zu verhindern, muss man sich mit einem eingesetzten Leitbleches behelfen.

Im Weiteren ist zum Beispiel aus der US 3,648,472 eine Dämpfungsvorrichtung an einer Entlüftungsleitung eines kryogenen Flüssigkeitsbehälters bekannt. Im Weiteren sind beispielsweise im nicht-kryogenen Bereich aus den Dokumenten US 3,157,202, US 1,459,797, GB 1,594,212 und US 2005/223707 weitere Dämpfungsvorrichtungen bekannt.

### Darstellung der Erfindung

Die vorliegende Erfindung hat sich zur Aufgabe gestellt, eine Pulsationsdämpfervorrichtung für diskontinuierlich fördernde Pumpen im kryogenen Betrieb bereitzustellen, welche die beschriebenen Nachteile des Standes des Technik überwindet und insbesondere die Dämpfung der Druckpulsationen weiter verbessert, mit geringem Aufwand betreibbar ist und wenig empfindlich auf schnelle Wechsel im Betriebszustand reagiert.

Diese Aufgaben erfüllt eine Pulsationsdämpfervorrichtung mit den Merkmalen des Patentanspruches 1.

Die erfindungsgemässe Pulsationsdämpfervorrichtung für diskontinuierlich fördernde Pumpen im kryogenen Betrieb zum Fördern eines kryogenen Fördermediums, insbesondere eines Flüssiggases, umfasst zumindest eine Zuleitung zum Zuleiten des kryogenen Fördermediums in einen Flüssiggasvolumenbereich der Pulsationsdämpfervorrichtung. Im Weiteren umfasst die erfindungsgemässe Pulsationsdämpfervorrichtung zumindest ein erstes Druckgefäss, wobei im Innenraum des ersten Druckgefässes ein erstes inneres Zylinderrohr anbringbar ist, und wobei das erste innere Zylinderrohr die Zuleitung zum Zuleiten von kryogenem Fördermedium in die Pulsationsdämpfervorrichtung umfasst. Dabei ist die erfindungsgemässe Pulsationsdämpfervorrichtung derart ausgestaltet, dass in der erfindungsgemässen Pulsationsdämpfervorrichtung ein Flüssiggasvolumenbereich mit einem Volumen an inkompressiblem Flüssiggas und ein Gasvolumenbereich mit einem Volumen an kompressiblem, verdampftem und Druckpulsationen dämpfendem Flüssiggas in gasförmigem Zustand ausgebildet ist.

Erfindungsgemäss umfasst das erste innere Zylinderrohr mindestens eine seitlich am Zylindermantel des inneren Zylinderrohrs angeordnete, erste Bohrung zum Durchleiten des kryogenen Fördermediums in den Innenraum des mindestens einen ersten Druckgefässes.

Es wird angenommen, dass ein Phasenwechsel flüssig-gasförmig des kryogenen Fördermediums beim Passieren der mindestens einen ersten Bohrung durch die erzielte Volumenvergrösserung beim Austritt aus der Bohrung begünstigt wird. Durch die Verwendung eines derartigen, mit seitlichen Bohrungen versehenen Innenzylinders wird somit vorteilhaft ein vergleichsweise hoher Anteil Gasvolumen in der erfindungsgemässen Pulsationsdämpfervorrichtung erzielt und ein Temperaturaustausch zwischen dem Flüssiggas und dessen verdampften Gas auf den Bereich der Bohrungen des Innenzylinders konzentriert.

Insbesondere wurde bei solchen Vergleichsversuchen der Förderdruck gemessen am zur Anwendung führenden Druckleitungsausgang gegen die Zeit aufgetragen. In diesen Vergleichsversuchen gegenüber bekannten ebenfalls auf einem Phasenwechsel beruhenden Pulsationsdämpfervorrichtungen konnte überraschend gefunden werden, dass anhand der erfindungsgemässen Pulsationsdämpfervorrichtung eine besonders wirksame Dämpfung auftretender Druckpulsationen erzielt werden kann beziehungsweise die Druckpulsationen nahezu aufgehoben werden können, insbesondere auch bei extremen Betriebszuständen wie beispielsweise erhöhte Fliessgeschwindigkeiten bei ungefähr 15 l/min und / oder bei hohem Förderdruck im Bereich von 300 bar. Mit anderen Worten konnten anhand der erfindungsgemässen Pulsationsdämpfervorrichtung die Druckpulsationen auf Werte unter 10% gegenüber den Werten unter Verwendung bekannter Pulsationsdämpfervorrichtungen reduziert werden. Insbesondere wurde zudem gefunden, dass aufgrund der effizienten Dämpfung der Druckpulsationen anhand der erfindungsgemässen Pulsationsdämpfervorrichtung auf weitere klassische als Verdampfer fungierende druckflaschenähnliche Druckreservoire (z.B. der Firma Cryostar) verzichtet werden kann.

Es wurde im Weiteren gefunden, dass durch die hierbei erzielte, besonders wirksame Dämpfung der Druckpulsationen anhand der erfindungsgemässen Pulsationsdämpfervorrichtung vorteilhaft gegenüber bekannten Pulsationsdämpfervorrichtungen die mechanische Beanspruchung verringert und dadurch die Lebensdauer der diskontinuierlich fördernden Pumpe im kryogenen Betrieb sowie weiterer Komponenten im Hydrauliksystem erhöht und der Stromverbrauch des Pumpen-Antriebsmotors reduziert wird. Im Weiteren wurde vorteilhaft gefunden, dass für die Funktion der erfindungsgemässen Pulsationsdämpfervorrichtung ein Temperaturaustausch mit der umgebenden Luft ungefähr bei Raumtemperatur genügt und somit aktiv keine Parametereinstellungen (z.B. Temperatur) eingestellt werden müssen beziehungsweise mit anderen Worten keine Heizung notwendig ist.

Im Sinne der vorliegenden Erfindung können als kryogenes Fördermedium beispielsweise Flüssiggase wie flüssiger Sauerstoff, flüssiges Methan, flüssiger Stickstoff etc. verwendet werden. Unter Flüssiggas wird ein durch Kühlung und Kompression verflüssigtes Gas verstanden. Im Weiteren kann im Sinne der vorliegenden Erfindung unter einer diskontinuierlich fördernden Pumpe beispielsweise eine Hubkolbenpumpe verstanden werden.

Die erfindungsgemässe Pulsationsdämpfervorrichtung umfasst mindestens ein zweites Druckgefäss, wobei zwischen jeweils zwei benachbarten Druckgefässen mindestens ein Verbindungsrohr zum Durchleiten von kryogenem Fördermedium dichtend anbringbar ist. Es wurde gefunden, dass durch mindestens ein derartig angeordnetes, zweites Druckgefäss vorteilhaft der kompressible Gasvolumenbereich vergrössert und dadurch die Dämpfwirkung der erfindungsgemässen Pulsationsdämpfervorrichtung verbessert wird.

Weitere vorteilhafte Ausgestaltungsformen sind in den abhängigen Patentansprüchen angegeben. Im Weiteren bevorzugt ist im Innenraum des mindestens einen zweiten Druckgefässes ein zweites inneres Zylinderrohr anbringbar und das zweite innere Zylinderrohr umfasst mindestens eine zweite Bohrung zum Durchleiten des kryogenen Fördermediums in den Innenraum des mindestens einen zweiten Druckgefässes. Es wurde gefunden, dass vorteilhaft durch ein Anbringen eines zweiten inneren, mit mindestens einer zweiten Bohrung versehenen Zylinderrohrs im zweiten Druckgefäss der Durchfluss des kryogenen Fördermediums verringert und dadurch eine Temperaturaustausch zwischen dem ersten und dem zweiten Druckgefäss minimiert wird. Mit anderen Worten erfüllt ein mit mindestens einer Bohrung versehenes, zweites inneres Zylinderrohr eine Barrierefunktion für den Durchfluss des kryogenen Fördermediums zwischen dem ersten und dem zweiten Druckgefäss, wodurch das im zweiten Druckgefäss enthaltene kryogene Fördermedium eine höhere Temperatur aufweist als das im ersten Druckgefäss enthaltene kryogene Fördermedium.

Gemäss einer bevorzugter Weiterbildung der vorliegenden Erfindung ist das erste und zweite Druckgefäss beziehungsweise der erste und zweite innere Zylinderrohr geometrisch identisch ausgestaltet sowie die ersten und zweiten Bohrung an gleicher Position und in gleicher Dimension des ersten und zweiten inneren Zylinderrohr ausgebildet. Es ist jedoch auch denkbar, dass sich Geometrien und Dimensionen hinsichtlich erster und zweiter Druckgefässe und innere Zylinderrohre unterscheiden.

Im Sinne einer bevorzugten Weiterbildung der vorliegenden Erfindung sind das erste und das zweite Druckgefäss durch längliche Druckflaschen ausgebildet, wobei die Druckflaschen in der Längserstreckung im Wesentlichen vertikal, d.h. in Schwerkraftrichtung, in der erfindungsgemässen Pulsationsdämpfervorrichtung angeordnet sind. Vorzugweise ist das erste innere Zylinderrohr mit der Zuleitung in Schwerkraftrichtung betrachtet unten in das bevorzugt vertikal angeordnete, erste Druckgefäss hineinführend anbringbar beziehungsweise das zweite innere Zylinderrohr mit der Zuleitung in Schwerkraftrichtung betrachtet unten in das bevorzugt vertikal angeordnete, zweite Druckgefäss hineinführend anbringbar.

Im Sinne der vorliegenden Erfindung ist im Rahmen der Montage der erfindungsgemässen Pulsationsdämpfervorrichtung das erste beziehungsweise zweite innere Zylinderrohr in das erste beziehungsweise zweite Druckgefäss einführbar und bevorzugt mittels Verschraubung fixierbar. Bevorzugt ist das erste beziehungsweise zweite innere Zylinderrohr in einem eingeführten Zustand konzentrisch zum vorzugsweise zylindrischen ersten beziehungsweise zweiten Druckgefäss angeordnet. Besonders bevorzugt erstreckt sich das erste beziehungsweise zweite innere Zylinderrohr in einem in das erste Druckgefäss eingeführten Zustand in Längsrichtung zu ungefähr zwei Dritteln in das erste Druckgefäss hinein.

Bevorzugt weist der Durchmesser des ersten und / oder zweiten inneren Zylinderrohrs gegenüber dem Durchmesser des ersten und / oder zweiten Druckgefässes ein bevorzugtes Verhältnis von bevorzugt 3 bis 14 zu 1, noch bevorzugter 3 bis 10 zu 1, am meisten bevorzugt 4 bis 10 zu 1 auf. Es hat sich gezeigt, dass das hierbei erzielte Verhältnis der Durchmesser innere Zylinderrohr zu Druckgefäss vorteilhaft ein inneres Zylinderrohr durch den erzielten, umgebenden Gasraum gegen aussen isoliert wird.

Vorzugsweise weist das Verbindungsrohr zweier benachbarter Druckgefässe verglichen mit den beiden Druckgefässen einen geringeren Durchmesser auf. Gemäss einer bevorzugten Ausführung ist das Verbindungsrohr S-förmig ausgestaltet und gewährleistet platzsparend durch eine solche Form eine Anordnung benachbarter Druckgefässe im Wesentlichen auf gleicher Höhe. Alternativ zu einer S-Form kann das Verbindungsrohr auch als ein geradliniges Rohr ausgestaltet sein, wodurch bei Anbringen des Verbindungsrohr im Kopfraum des ersten Druckgefässes zwei benachbarte Druckgefässe übereinanderliegend angeordnet sind.

Grundsätzlich ist es auch denkbar, dritte und weitere, vorzugsweise ebenfalls identisch ausgestaltete Druckgefässe in einer Kaskade, d.h. seriell hintereinander geschaltet, anzuordnen und mittels solcher Verbindungsrohre zu verbinden, wobei eine Zuleitung vorzugweise in Schwerkraftrichtung betrachtet von unten in die vertikal angeordneten, weiteren Druckgefässe erfolgt.

Gemäss einer weiteren bevorzugten Weiterbildung der vorliegenden Erfindung umfasst das erste und / oder zweite innere Zylinderrohr in einem der Zuleitung zugewandten Bereich mindestens eine erste und / oder zweite Bohrung. Bevorzugt umfasst das erste innere Zylinderrohr bis zu zehn erste Bohrungen, noch bevorzugter sechs bis acht erste Bohrungen. Die mindestens eine erste Bohrung ist vorzugsweise kreisrund ausgebildet und weist bevorzugt einen Durchmesser geeignet zum Einsprühen des kryogenen Fördermediums in den Innenraum des ersten und / oder zweiten Druckgefässes. Ganz besonders bevorzugt sind in einer axialen Lage ein Paar von einander gegenüberliegenden ersten Bohrungen angeordnet, wobei bevorzugt die Paare von Bohrungen in einer axialen Lage zu einem benachbarten Paar Bohrungen in einer weiteren axialen Lage um jeweils einen Winkel von 90° zueinander verdreht angeordnet ist.

Vorzugsweise umfasst das erste und / oder zweite innere Zylinderrohr im in Schwerkraftrichtung betrachtet unteren, der Zuleitung zugewandten Bereich, besonders bevorzugt in einem untersten Drittel des inneren Zylinderrohrs, die ersten und / oder zweiten Bohrungen auf. Aufgrund der Konzentrierung des Temperaturaustauschs zwischen Flüssiggas und dessen verdampften Gas im Bereich der Bohrungen halten solche unten nahe der Zuleitung angebrachte Bohrungen vorteilhaft den Bereich des Temperaturaustauschs gering. Mit anderen Worten wurde gefunden, dass eine solche Anordnung das eintretende Flüssiggas zwingt, im noch flüssigen Aggregatszustand im unteren, der Zuleitung zugewandten Bereich zu verbleiben, dadurch ein erneutes Abkühlen im oberen, der Zuleitung abgewandten Bereich verringert und vorteilhaft der Gasvolumenbereich mit kompressiblem, Druckpulsationen dämpfenden Flüssiggas in gasförmigem Zustand zusätzlich möglichst gross gehalten wird.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben. Es zeigen:
- Fig. 1: eine schematische Seitenansicht einer ersten bevorzugten Ausführungsform der erfindungsgemässen Pulsationsdämpfervorrichtung verbunden mit einer Kolbenpumpe;
- Fig. 2: eine schematische Seitenansicht einer zweiten bevorzugten Ausführungsform der erfindungsgemässen Pulsationsdämpfervorrichtung verbunden mit einer Kolbenpumpe;
- Fig. 3: eine Explosionsansicht der ersten bevorzugten Ausführungsform der erfindungsgemässen Pulsationsdämpfervorrichtung;
- Fig. 4: einen teilweisen Längsschnitt durch ein erstes oder zweites Druckgefäss.

### Beschreibung

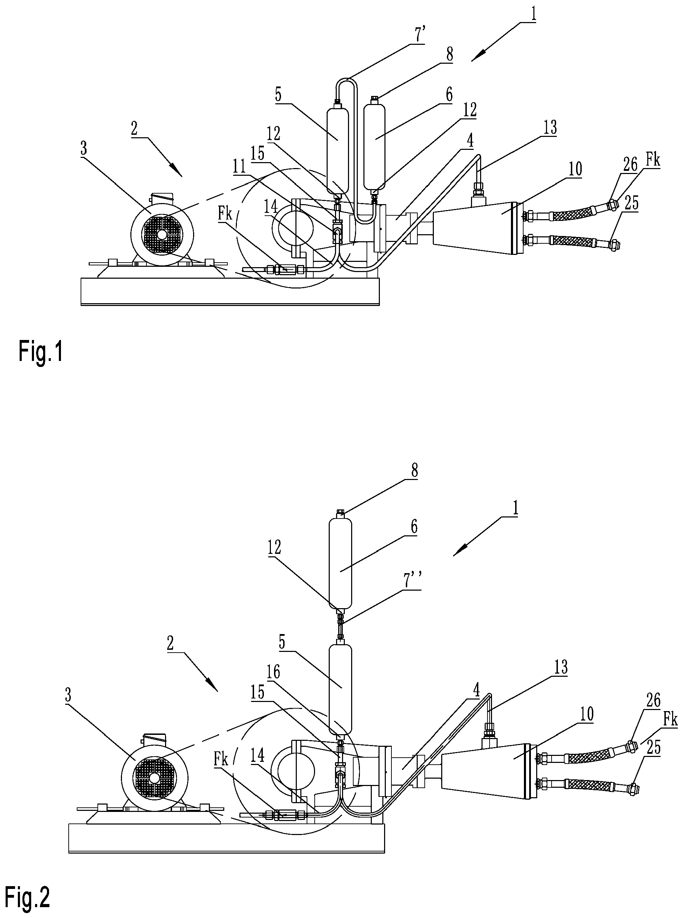

**Fig. 1** zeigt eine schematische Seitenansicht einer ersten bevorzugten Ausführungsform der erfindungsgemässen Pulsationsdämpfervorrichtung 1 beispielhaft verbunden mit einer Hubkolbenpumpe als diskontinuierlich fördernde Pumpe 2 im kryogenen Betrieb, wobei die Pumpe 2 im Wesentlichen einen Antriebsmotor 3, ein Kurbeltrieb 4 sowie eine Kolbenpumpen-Kompressoreinheit 10 umfasst.

Über eine Saugleitung 25 wird im Betrieb der Pumpe 2 mit der erfindungsgemässen Pulsationsdämpfervorrichtung 1 das kryogene Fördermedium Fk während eines Zylinderfüllhubs der Pumpe 2 in die Kompressoreinheit 10 gesaugt. Während eines Zylinderleerhubs der Pumpe 2 wird das kryogene Fördermedium Fk in eine erste, in Richtung der erfindungsgemässen Pulsationsdämpfervorrichtung verlaufende Druckleitung 13 herausgedrückt. Wie in **Fig.1** im Weiteren ersichtlich ist zwischen der ersten Druckleitung 13 und einer von der erfindungsgemässen Pulsationsvorrichtung 1 wegführenden und zur Anwendung führenden zweiten Druckleitung 14 eine Abzweigung 11 angeordnet. Das während des Zylinderleerhubs der Pumpe 2 im Betrieb der Pumpe 2 herausgedrückte, kryogene Fördermedium Fk gelangt über die Druckleitung 13, die Abzweigung 11, ein gemeinsames Rohr 15 und die Zuleitung 12 zum Zuleiten des kryogenen Fördermediums Fk in die erfindungsgemässe Pulsationsdämpfervorrichtung 1, wobei eine Teilmenge des Fördermediums Fk vom Pulsationsdämpfer aufgenommen und der in der erfindungsgemässen Pulsationsdämpfervorrichtung 1 ausgebildete Gasvolumenbereich des verdampften Flüssiggases komprimiert wird. Im Weiteren ist an der Kompressoreinheit 10 eine Bypass Leitung 26 ersichtlich. Dabei die Bypass Leitung 26 derart ausgebildet und angeordnet ist, um ein Zirkulieren des kryogenen Fördermediums Fk über einen Bypass zu erzielen und dadurch ein stetiges Abführen von allfälliger Gasblasen sowie ein Konstanthalten der Temperatur zu gewährleisten.

Die in **Fig. 1** gezeigte, erfindungsgemässe Pulsationsdämpfervorrichtung 1 umfasst eine erste Druckflasche 5 sowie eine zweite Druckflasche 6, wobei die beiden Druckflaschen 5;6 durch ein Verbindungsrohr 7 zum Durchleiten von kryogenem Fördermedium Fk verbunden sind.

Wie in **Fig. 1** ersichtlich ist das querschnittsverengte Verbindungsrohr 7' derart S-förmig ausgestaltet, so dass das zweite Druckgefäss 6 nahezu auf gleicher, axialer Höhe zum ersten Druckgefäss 5 angeordnet ist, wobei das S-förmige Verbindungsrohr 7' vom Kopfraum des ersten, vertikal angeordneten Druckgefässes 5 zu einem in Schwerkraftrichtung betrachtet, untersten Bereich des zweiten, vertikal angeordneten Druckgefässes 6 sich erstreckend angeordnet ist. Vorzugsweise sind die beiden Druckgefässe 5;6 mit einer geeigneten Vorrichtung (nicht gezeigt in Fig. 1) in Position gehalten. Das zweite Druckgefäss 6 ist mittels eines Verschlusselements 8 beispielsweise mittels einer geeigneten Verschraubung gasdicht verschliessbar, falls kein weiteres Druckgefäss nachgeschaltet ist.

Von hier an und im Folgenden bezeichnen gleiche Referenzzeichen gleiche Komponenten in den Figuren.

Im Weiteren zeigt **Fig. 2** eine schematische Seitenansicht einer zweiten bevorzugten Ausführungsform der erfindungsgemässen Pulsationsdämpfervorrichtung 1 beispielhaft verbunden mit einer Hubkolbenpumpe als diskontinuierlich fördernde Pumpe 2 im kryogenen Betrieb.

Wie in **Fig. 2** ersichtlich ist ein Verbindungsrohr 7" als geradliniges Rohr ausgebildet, so dass das zweite Druckgefäss 6 über dem ersten Druckgefäss 5 angeordnet ist.

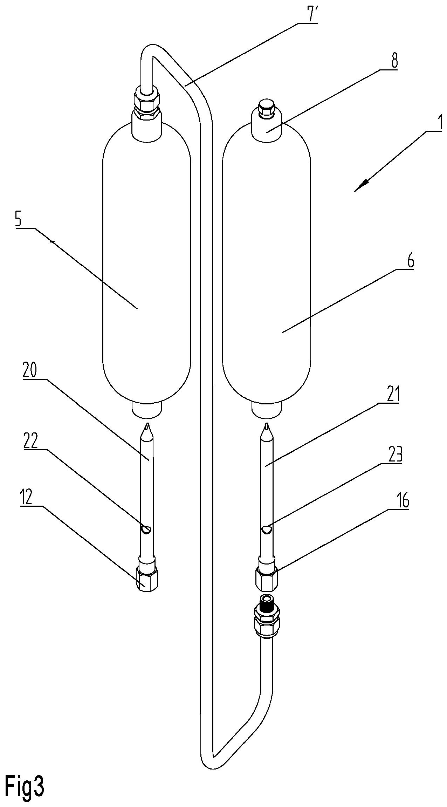

In **Fig. 3** wird eine Explosionsansicht der ersten bevorzugten Ausführungsform der erfindungsgemässen Pulsationsvorrichtung 1 gezeigt. **Fig. 3** zeigt das erste innere Zylinderrohr 20, welches in Schwerkraftrichtung betrachtet von unten in das vertikal angeordnete, erste Druckgefäss 5 einführbar und mittels Verschraubung daran fixierbar ist. Im Weiteren zeigt **Fig. 3** ein zweites inneres Zylinderrohr 21, welches in Schwerkraftrichtung betrachtet von unten in das das vertikal angeordnete, zweite Druckgefäss 6 einführbar und ebenfalls mittels Verschraubung daran fixierbar ist. Im Weiteren ist das S-förmige Verbindungsstück 7' wie in **Fig. 3** gezeigt mittels Verschraubung mit Zuleitung 16 des zweiten inneren Zylinderrohrs 21 fest fixierbar.

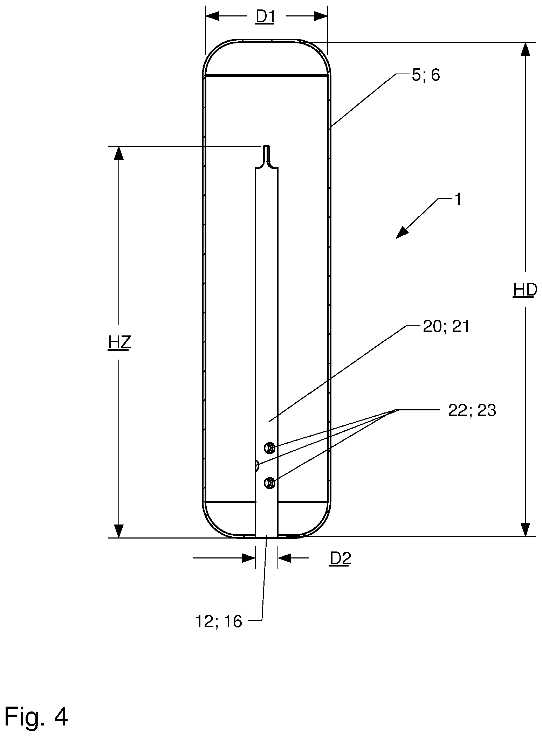

**Fig. 4** zeigt einen Längsschnitt durch ein bevorzugt identisch ausgestaltetes, erstes oder zweites Druckgefäss 5; 6 mit einem (nicht geschnitten gezeigten) bevorzugt identisch ausgestalteten, ersten oder zweiten inneren Zylinderrohr 20; 21, wobei ein Zylinderrohr 20; 21 vollständig in das Druckgefäss 5; 6 eingeführt ist. Wie in **Fig. 4** ersichtlich ist das erste oder zweite innere Zylinderrohr 20; 21 in Schwerkraftrichtung betrachtet nach oben hin dichtend abgeschlossen, während das erste oder zweite innere Zylinderrohr 20; 21 unten am gegenüberliegenden Ende eine Zuleitung 12; 16 zum Zuleiten des kryogenen Fördermediums Fk in die Pulsationsdämpfervorrichtung 1 umfasst.

Gemäss **Fig. 4** umfasst das erste oder zweite innere Zylinderrohr im in Schwerkraftrichtung betrachtet unteren, der Zuleitung 12 zugewandten Bereich beispielhaft sechs Bohrungen auf, wobei jeweils in einer axialen Lage ein Paar von gegenüberliegenden Bohrungen 22; 23 angeordnet ist. Gemäss **Fig. 4** ist zudem ein Paar von Bohrungen in einer axialen Lage zu einem benachbarten Paar Bohrungen in einer weiteren axialen Lage um jeweils einen Winkel von 90° zueinander verdreht angeordnet.

Das erste oder zweite innere Zylinderrohr 20; 21 weist einen Durchmesser D2 sowie eine Höhe HZ auf. Im Weiteren weist das erste oder zweite Druckgefäss einen Durchmesser D1 auf sowie eine Höhe HD auf. Das Verhältnis D1 zu D2 ist besonders bevorzugt 4 bis 10 zu 1.

### Bezugszeichenliste

- 1: Pulsationsdämpfervorrichtung
- 2: Pumpe
- 3: Antriebsmotor
- 4: Kurbeltrieb
- 5: erstes Druckgefäss
- 6: zweites Druckgefäss
- 7', 7": Verbindungsrohr (zwischen Druckgefässen)
- 8: Verschlusselement
- 10: Kolbenpumpen-Kompressoreinheit
- 11: Abzweiger
- 12: Zuleitung (erstes Druckgefäss)
- 13: erste Druckleitung
- 14: zweite Druckleitung (anwendungsseitig)
- 15: Rohr
- 16: Zuleitung (zweites Druckgefäss)
- 20: erstes inneres Zylinderrohr
- 21: zweites inneres Zylinderrohr
- 22: erste Bohrungen (erstes inneres Zylinderrohr)
- 23: zweite Bohrungen (zweites inneres Zylinderrohr)
- 25: Saugleitung
- 26: Bypass Leitung
- Fk: kryogenes Fördermedium
- HD: Höhe Druckflaschen
- HZ: Höhe innere Zylinderrohre
- D1: Durchmesser Druckgefäss
- D2: Durchmesser Zylinderrohr

## Patentansprüche

1. Pulsationsdämpfervorrichtung (1) für diskontinuierlich fördernde Pumpen (2) im kryogenen Betrieb zum Fördern eines kryogenen Fördermediums (Fk), insbesondere eines Flüssiggases, umfassend:
- mindestens eine Zuleitung (12) zum Zuleiten des kryogenen Fördermediums (Fk) in die Pulsationsdämpfervorrichtung (1);
- ein erstes Druckgefäss (5);
wobei im Innenraum des ersten Druckgefässes (5) ein erstes inneres Zylinderrohr (20) angebracht ist, und wobei das erste innere Zylinderrohr (20) die Zuleitung (12) zum Zuleiten von kryogenem Fördermedium (Fk) in die Pulsationsdämpfervorrichtung (1) umfasst, und
wobei im Innenraum des ersten Druckgefässes (5) der Pulsationsdämpfervorrichtung (1) ein Flüssiggasvolumenbereich mit einem Volumen an inkompressiblem Flüssiggas und ein Gasvolumenbereich mit einem Volumen an kompressiblem, verdampftem Flüssiggases in gasförmigem Zustand ausbildbar ist,
wobei das erste innere Zylinderrohr (20) mindestens eine seitlich an einem Zylindermantel angeordnete, erste Bohrung (22) zum Durchleiten des kryogenen Fördermediums (Fk) in den Innenraum des mindestens einen ersten Druckgefässes (5) umfasst,
**dadurch gekennzeichnet,**
**dass** die Pulsationsdämpfervorrichtung (1) mindestens ein zweites Druckgefäss (6) umfasst, wobei zwischen jeweils zwei benachbarten Druckgefässen (5; 6) mindestens ein Verbindungsrohr (7'; 7") zum Durchleiten von kryogenem Fördermedium (Fk) angebracht ist
und wobei das zweite Druckgefäss (6) mittels eines Verschlusselements (8) gasdicht verschliessbar ist.

2. Pulsationsdämpfervorrichtung (1) nach Patentanspruch 1, **dadurch gekennzeichnet, dass**
im Innenraum des mindestens einen zweiten Druckgefässes (6) ein zweites inneres Zylinderrohr (21) anbringbar ist und dass das zweite innere Zylinderrohr (21) mindestens eine zweite Bohrung (23) zum Durchleiten des kryogenen Fördermediums (Fk) in den Innenraum des mindestens einen zweiten Druckgefässes (6) umfasst.

3. Pulsationsdämpfervorrichtung (1) nach Patentanspruch 2,
**dadurch gekennzeichnet, dass**
das erste innere Zylinderrohr (20) und / oder das zweite innere Zylinderrohr (21) zehn, noch bevorzugter sechs bis acht Bohrungen (22; 23) umfasst.

## Claims

1. A pulsation damper device (1) for discontinuously conveying pumps (2) in cryogenic operation for conveying a cryogenic conveying medium (Fk), in particular a liquid gas, comprising:
- at least one feed line (12) for feeding the cryogenic conveying medium (Fk) into the pulsation damper device (1);
- a first pressure vessel (5);
wherein a first inner cylinder tube (20) is fitted in the interior of the first pressure vessel (5), and wherein the first inner cylinder tube (20) comprises the feed line (12) for feeding cryogenic conveying medium (Fk) into the pulsation damper device (1), and
wherein in the interior of the first pressure vessel (5) of the pulsation damper device (1), a liquid gas volume region with a volume of incompressible liquid gas and a gas volume region with a volume of compressible, evaporated liquid gas can be formed in the gaseous state, wherein the first inner cylinder tube (20) comprises at least one first bore (22) arranged laterally on the cylinder jacket for passing the cryogenic conveying medium (Fk) into the interior of the at least one first pressure vessel (5),
**characterized in**
**that** the pulsation damper device (1) comprises at least one second pressure vessel (6), wherein at least one connecting tube (7'; 7") for the passage of cryogenic conveying medium (Fk) is fitted between in each case two adjacent pressure vessels (5; 6),
and wherein the second pressure vessel (6) can be closed in a gas-tight manner by means of a closure element (8).

2. The pulsation damper device (1) according to claim 1,
**characterized in that**
a second inner cylinder tube (21) can be fitted in the interior of the at least one second pressure vessel (6) and **in that** the second inner cylinder tube (21) comprises at least one second bore (23) for the passage of the cryogenic conveying medium (Fk) into the interior of the at least one second pressure vessel (6).

3. The pulsation damper device (1) according to claim 2,
**characterized in that**
the first inner cylinder tube (20) and/or the second inner cylinder tube (21) comprises ten, more preferably six to eight bores (22; 23).

## Revendications

1. Dispositif amortisseur de pulsations (1) pour pompes refoulant de façon discontinue (2) dans un système cryogénique pour refouler un fluide refoulé cryogénique (Fk), notamment un gaz liquide, comprenant :
- au moins un conduit d'arrivée (12) pour acheminer le fluide refoulé cryogénique (Fk) dans le dispositif amortisseur de pulsations (1) ;
- un premier conteneur sous pression (5) ;
un premier tube cylindrique intérieur (20) pouvant étant monté dans l'espace intérieur du premier conteneur sous pression (5) et le premier tube cylindrique intérieur (20) comprenant le conduit d'arrivée (12) pour acheminer le fluide refoulé cryogénique (Fk) dans le dispositif amortisseur de pulsations (1), et
une plage de volume de gaz liquide avec un volume en gaz liquide incompressible et une plage de volume de gaz en gaz liquide évaporé compressible à l'état gazeux pouvant être constituées dans l'espace intérieur du premier conteneur sous pression (5) du dispositif amortisseur de pulsations (1),
le premier tube cylindrique intérieur (20) comprenant au moins un premier trou (22) disposé latéralement sur une enveloppe cylindrique pour faire passer le fluide refoulécryogénique (Fk) dans l'espace intérieur d'au moins un premier conteneur sous pression (5),
**caractérisé en ce que**
le dispositif amortisseur de pulsations (1) comprend au moins un deuxième conteneur sous pression (6), au moins un tuyau de liaison (7', 7") étant monté entre respectivement deux conteneurs sous pression voisins (5 ; 6) pour faire passer du fluide refoulé cryogénique (Fk)
et le deuxième conteneur sous pression (6) pouvant être fermé étanche au gaz au moyen d'un élément de fermeture (8).

2. Dispositif amortisseur de pulsations (1) selon la revendication 1,
**caractérisé en ce qu'**
un deuxième tube cylindrique intérieur (21) peut être monté dans l'espace intérieur d'au moins un deuxième conteneur sous pression (6) et **en ce que** le deuxième tube cylindrique intérieur (21) comprend au moins un deuxième trou (23) pour faire passer le fluide refoulé cryogénique (Fk) dans l'espace intérieur d'au moins un deuxième conteneur sous pression (6).

3. Dispositif amortisseur de pulsations (1) selon la revendication 2,
**caractérisé en ce que**
le premier tube cylindrique intérieur (20) et/ou le deuxième tube cylindrique intérieur (21), comprend dix trous, de façon plus préférée six à huit trous (22 ; 23).
